(19)

Europäisches
Patentamt
European
Patent Office
Office européen
des brevets

(11)     **EP 1 923 439 A1**

(12)                    **EUROPEAN PATENT APPLICATION**

(43) Date of publication:
     **21.05.2008   Bulletin 2008/21**

(51) Int Cl.:
     **C09J 7/02** *(2006.01)*

(21) Application number: **06291789.3**

(22) Date of filing: **16.11.2006**

(84) Designated Contracting States:
     **AT BE BG CH CY CZ DE DK EE ES FI FR GB GR
     HU IE IS IT LI LT LU LV MC NL PL PT RO SE SI
     SK TR**
     Designated Extension States:
     **AL BA HR MK RS**

(71) Applicant: **Rohm and Haas France SAS**
     **75579 Paris, Cedex 12 (FR)**

(72) Inventors:
     • **Uhl, Isabelle**
       **06130 Grasse (FR)**

• **Griffith, William**
  **North Wales, Pennsylvania 19454 (US)**
• **Slone, Rob**
  **Amber, Pennsylvania 19002 (US)**

(74) Representative: **Buckley, Guy Julian**
     **Rohm and Haas France SAS,**
     **185 Rue de Bercy**
     **75579 Paris Cedex 12 (FR)**

(54)     **Emulsion based adhesive product**

(57)     A low noise adhesive product and a process for making such is disclosed. This adhesive product is useful as packaging tape.

**Description**

The present invention relates to a low noise adhesive product, more specifically, a low noise tape product containing an adhesive coating having small unimodal or bimodal emulsion polymers and a process for making such a product.

Currently, known adhesive tapes unwind relatively noisily when used in practice, i.e., at unwind speeds of between 20 and 200 m/min, and lead to deterioration in working conditions as a result of increased noise levels. There is an increasing global demand for a cost efficient, productive, nontoxic, low noise tape product. This demand is especially manifest in the European market.

US Patent 6,706,392 discloses one such tape which attempts to solve this problem of noisy unwind. US 6,706,392 discloses a solvent-free adhesive tape with a film based on polyolefins and an adhesive based on acrylic dispersion. Although this product may disclose benefits associated with noisy unwind, it requires the use of a very toxic material, propyleneimine..

The present invention solves this problem of noisy unwind and toxicity by providing an adhesive product containing emulsion polymers that comprise more than one particle where at least one particle has an average particle diameter of less than or equal to 250nm and at least one particle has an average particle diameter of greater than 250nm. This adhesive product is capable of obtaining quiet unwind at high unwind speeds, is just as efficient as other tape products, and eliminates the use of proplyeneimine and other toxic aziridines. Eliminating the use of these toxic compounds in low noise tape products is especially beneficial because markets are increasingly becoming more and more environmentally conscious and care about the materials that are used in production.

Thus, the present invention provides a non toxic, low noise adhesive product comprising small unimodal and/or bimodal emulsion polymer on polyolefin tape. It has been found that low noise performance is less sensitive to process and compositional variations in bimodal pressure sensitive adhesive emulsions than in the prior art unimodal emulsions. Furthermore, bimodal pressure sensitive adhesive emulsions may be formed at higher solids than unimodal emulsions while maintaining low viscosity, thereby allowing for greater production capacity from a given vessel. They also have lower shipping costs per weight of dry polymer and faster drying of the higher solids adhesive in the tape making process thereby yielding increased production capacity and/ or reduced energy consumption in the drying ovens.
It is also contemplated that broad weight average particle diameter distributions or distributions of three or more weight average particle diameter modes wherein at least one of the modes is a fine mode will provide suitable low noise adhesive products. The present invention also demonstrates unexpected results in quiet unwind at high unwind speeds and preference as an adhesive packaging tape for commercially customary cardboard packaging applications.

As used herein, the use of the term "(meth)" followed by another term such as acrylate refers to both acrylates and methacrylates. For example, the term "(meth)acrylate" refers to either acrylate or methacrylate; the term "(meth)acrylic" refers to either acrylic or methacrylic; the term "(meth)acrylonitrile" refers to either acrylonitrile or methacrylonitrile; and the term "(meth)acrylamide" refers to either acrylamide or methacrylamide.

"Glass transition temperature" or "$T_g$" as used herein, means the temperature at or above which a glassy polymer will undergo segmental motion of the polymer chain. Glass transition temperatures of a polymer can be estimated by the Fox equation [Bulletin of the American Physical Society, 1, 3, p.123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, and $T_{g(1)}$ and $T_{g(2)}$ refer to the glass transition temperatures of the two corresponding homopolymers in degrees Kelvin. For polymers containing three or more monomers, additional terms are added ($w_n/T_{g(n)}$). The $T_g$ of a polymer phase can also be calculated by using the appropriate values for the glass transition temperatures of homopolymers, which may be found, for example, in "Polymer Handbook", edited by J. Brandrup and E. H. Immergut, Interscience Publishers. The values of $T_g$ reported herein are calculated using the Fox equation. When calculating the overall $T_g$ of aqueous polymer dispersions having multiple weight average particle diameter distributions, a calculated $T_g$ of each portion of the dispersion applies. More particularly, an overall Tg of a polymers dispersion would be calculated, using the Fox Equation, based upon all of the monomers in the dispersion.

As used herein, the term "dispersion" refers to a physical state of matter that includes at least two distinct phases, wherein a first phase is distributed in a second phase, with the second phase being a continuous medium. An aqueous polymer dispersion is a dispersion containing a first phase distributed in an aqueous second phase that is predominately water and may contain minor amounts of water soluble or water miscible liquids, such as lower alkyl alcohols, ketones, or glycols.

## DETAILED DESCRIPTION OF THE INVENTION

In a first aspect of the present invention, there is provided a low noise adhesive product comprising an adhesive layer formed by the drying of an emulsion polymer on a polyolefin film;
wherein the emulsion polymer comprises:

(a) a fine mode comprising 5-95% by weight, based on a total weight of polymer, of first particles having a weight average diameter of less than or equal to 250 nanometers; and
(b) a large mode comprising at least 5% by weight, based on a total weight of polymer, second particles having a weight average diameter of greater than 250 nanometers; and

further wherein the overall Tg of the emulsion polymer is less than -20° C and the emulsion polymer does not comprise one or more aziridines.

In a second aspect of the present invention, there is provided a process of making a low noise adhesive product comprising

(a) coating a treated surface of a polyolefin film with an emulsion polymer wherein the emulsion polymer comprises:

(i) a fine mode comprising 5-95% by weight, based on a total weight of polymer, first particles having a weight average diameter of less than or equal to 250 nanometers; and
(ii) a large mode comprising at least 5% by weight, based on a total weight of polymer, second particles having a weight average diameter of greater than 250 nanometers; and further wherein the overall Tg of the emulsion polymer is less than -20 ° C and the emulsion polymer does not comprise one or more aziridines;

(b) drying the emulsion polymer on the polyolefin film after coating; and

(c) treating the uncoated side of the polyolefin film.

In the art, monoaxially and biaxially oriented films based on polypropylene are used in large amounts for adhesive packaging tapes, strapping tapes, and other adhesive tapes. Films based on oriented polyethylene or oriented copolymers containing ethylene and/or propylene units are also known. Mixtures of the various polymers can also be used for producing the films.

The surfaces of the films are treated by known techniques. Preference is given to surface treatments by corona, flame, and or plasma pretreatment. An overview of the techniques of surface treatment is contained, for example, in the article "Surface pretreatment of plastics for adhesive bonding" (A. Kruse, G. Krüger, A. Baalmann, and O.-D. Hennemann, J. Adhesion Sci. Technol., Vol.9, No. 12, pp.1611-1621 (1995). Typically, both sides of the tape product will be treated to lower the surface energy of the side of the film on which the adhesive is coated (first side) to a level ranging from upper limits of 47, 45 and 42 dynes to lower levels of 35, 38 and 40 dynes. All treatment ranges are inclusive and combinable.

The uncoated side (second side) of the tape is typically treated to a surface tension approximately 4 dynes less than the first coated side. The uncoated side can be surface treated prior to coating, directly after coating, or else in a separate step: for example, during slitting and rewinding. The surface treatment of the uncoated side takes place preferably after coating. Preference is given to a corona pretreatment which produces a surface tension, measured using standard commercial test inks, ranging from upper limits of 43, 41, and 38 dynes to lower limits of 31, 34, and 36 dynes. All treatment ranges are inclusive and combinable. Likewise possible is a surface treatment by means of flaming and/or plasma.

The application rate of the adhesive layer is from 10 to 45 g/m$^2$. In one embodiment, an application rate of 18 to 35 g/m$^2$, with particular preference 18-28 g/m$^2$, is set.

The adhesive tape of the invention can further be printed without the need for a further surface treatment, such as by corona discharge, during the printing operation. The use of films based on polyolefins, preferably oriented polyolefins, have been known for a long time and is part of the state of the art.

Aqueous polymer dispersions are known and are employed both for adhesive tapes and for adhesives for labels, in large quantities. These dispersions typically comprise particles of acrylic polymers which are in disperse distribution in the aqueous phase of the dispersion. In the present invention, these aqueous polymer dispersions have multiple average particle diameter distributions wherein one or more particles has a diameter of less than or equal to 250 nm and one or more particles have a diameter of greater than 250 nm. As used herein, particles that are less than or equal to 250nm in weight average diameter are referred to as "small particles" or "fine mode". As used herein particles having a weight average diameter of greater than 250 nm are referred to as "large mode".

The emulsion polymers of the present invention comprise fine mode particles ranging in weight average particle diameters from an upper limit of 250 to a lower limit of 50nm. Typically these small modes have a weight average particle diameter in the range of 100 to 200 nm. Furthermore these small mode particles are present in the emulsion polymer at ranges from upper limits of 100, 50 and 20% by weight of small particles to a lower limit of 5 %, by weight of small particles.

Additionally, the emulsion polymers of the present invention comprise large mode particles ranging in weight average particle diameter greater than 250 nm. Typically these second particles have a weight average particle diameter of greater than 300 nm.

Aqueous polymer dispersions of the present invention that contain particles having bimodal particle diameter distributions may be prepared by various emulsion polymerization processes. For example, an aqueous polymer dispersion having a bimodal particle diameter distribution may be prepared by polymerizing a first mode of polymer particles, adding surfactant or seed polymer particles suitable to initiate a second mode of polymer particles, and then polymerizing monomer to prepare the second mode of polymer particles. The diameters of the first and second modes of polymer particles are controlled by surfactant level, surfactant type, number of seed particles, or other synthesis parameters. Furthermore, the multi-modal polymer can be made by blending various unimodal or multi-modal parts together to form the overall polymer system.

The formation of the second mode of second polymer particles may be aided by the addition of seed polymers, surfactant, miniemulsion, or pH adjusting agents such as buffers. Miniemulsions are well known in the art as oil-in-water dispersions, with droplet diameter below 1 micron, that are stable for a period ranging from hours to months. Within the context of this invention, the droplets of the miniemulsion may contain ethylenically unsaturated monomers and other optional components as needed to provide stable sub-micron droplets. These other optional components include compounds of very low water-solubility and are referred in the art as co-surfactants, co-stabilizers, or hydrophobes. Typical hydrophobes include higher alkanes such as hexadecane, hydrophobic alcohols such as cetyl alcohol, very hydrophobic monomers such as stearyl methacrylate, and polymers. Miniemulsions are typically formed under high shear through the use of rotor-stator devices, sonifiers, and high pressure homogenizers. Miniemulsions are typically made using surfactants. Description of mini-emulsions and their use in emulsion polymerization can be found in "Miniemulsion Polymerization" by J.M. Asua in Progress in Polymer Science, Vol.27, pp.1283-1346 (2002). The aqueous polymer dispersion containing disparate modes of polymer particles, in which each mode has a different weight average particle diameter, is characterized as having a weight average particle diameter distribution having two or more peaks. The weight average particle diameter distribution is the weight of polymer particles having a certain particle diameter as a function of the particle diameter. Each peak is associated with a mode of polymer particles. The weight average particle diameter distribution is measured using a capillary hydrodynamic fractionation apparatus, such as the Matec CHDF-2000 apparatus (Matec Applied Sciences, MA) with ultraviolet detection at 200 nm. Weight average particle diameter standards are provided by National Institute of Standards and Technology (NIST) traceable polystyrene standards of 50 to 800 nm, such as supplied by Duke Scientific Corporation, CA.

Prior to addition to the aqueous medium, the ethylenically unsaturated monomers may be emulsified in water with an anionic or nonionic dispersing agent, also referred to as a surfactant, present at ranges from upper limits of 2, 1.5, and 1% to lower limits of 0.05, 0.075, and 0.1%. All dispersing agent ranges are inclusive and combinable. Combinations of anionic and nonionic dispersing agents may also be used. Optionally, a copolymerizable surfactant having at least one polymerizable ethylenically unsaturated bond may be employed.

Suitable anionic dispersing agents include, for example, the higher fatty alcohol sulfates, such as sodium lauryl sulfate; alkylaryl sulfonates such as sodium or potassium isopropylbenzene sulfonates or isopropyl naphthalene sulfonates; alkali metal higher alkyl sulfosuccinates, such as sodium octyl sulfosuccinate, sodium N-methyl-N-palmitoylaurate, sodium oleyl isothionate; alkali metal salts and ammonium salts of alkylarylpolyethoxyethanol sulfates, sulfonates, or phosphates, such as sodium tert-octylphenoxypolyethoxyethyl sulfate having 1 to 50 oxyethylene units; alkali metal salts and ammonium salts of alkyl polyethoxyethanol sulfates, sulfonates, and phosphates; and alkali metal salts and ammonium salts of aryl polyethoxyethanol sulfates, sulfonates, and phosphates.

Suitable nonionic dispersing agents include alkylphenoxypolyethoxyethanols having alkyl groups of from about 7 to 18 carbon atoms and from about 6 to about 60 oxyethylene units, such as heptylphenoxypolyethoxyethanols, methyloctyl phenoxypolyethoxyethanols; polyethoxyethanol derivatives of methylene-linked alkyl phenols; sulfur-containing agents such as those made by condensing from about 6 to 60 moles of ethylene oxide with nonyl mercaptan, dodecyl mercaptan, or with alkylthiophenols wherein the alkyl groups contain from 6 to 16 carbon atoms; ethylene oxide derivatives of long chained carboxylic acids, such as lauric acid, myristic acid, palmitic acid, oleic acid, or mixtures of acids such as those found in tall oil containing from 6 to 60 oxyethylene units per molecule; analogous ethylene oxide condensates of long chained alcohols such as octyl, decyl, lauryl, or cetyl alcohols, ethylene oxide derivatives of etherified or esterified polyhydroxy compounds having a hydrophobic hydrocarbon chain, such as sorbitan monostearate containing from 6 to 60 oxyethylene units; block copolymers of ethylene oxide section combined with one or more hydrophobic propylene oxide sections. Mixtures of alkyl benzenesulfonates and ethoxylated alkylphenols may be employed.

The emulsion polymerization process may be a thermal or redox type; that is, free radicals may be generated solely by the thermal dissociation of an initiator species or a redox system may be used. A polymerization initiator of the free radical type, such as ammonium or potassium persulfate, may be used alone or as the oxidizing component of a redox system, which also includes a reducing component such as potassium metabisulfite, sodium thiosulfate, or sodium formaldehyde sulfoxylate. The reducing component is frequently referred to as an accelerator. The initiator and accelerator, commonly referred to as catalyst, catalyst system, or redox system, may be used in proportion from about 0.01% or less to 3% each, based on the weight of monomers to be polymerized. Examples of redox catalyst systems include t-butyl hydroperoxide/sodium formaldehyde sulfoxylate/Fe(II) and ammonium persulfate/sodium bisulfite/sodium hydrosulfite/Fe(II). Other suitable initiators include azo compounds. The polymerization temperature may be from 10°C to 90°C, or more, and may be optimized for the catalyst system employed, as is conventional. Emulsion polymerization may be seeded or unseeded.

A monomer emulsion containing all or some portion of the monomers to be polymerized may be prepared using the monomers, water, and surfactants. A catalyst solution containing catalyst in water may be separately prepared. The monomer emulsion and catalyst solution may be cofed into the polymerization vessel over the course of the emulsion polymerization. The reaction vessel may also additionally contain seed emulsion and further may additionally contain an initial charge of the polymerization catalyst. The temperature of the reaction vessel during the emulsion polymerization may be controlled by cooling to remove heat generated by the polymerization reaction or by heating the reaction vessel. The pH of the contents of the reaction vessel may also be altered during the course of the emulsion polymerization process. Additionally, the emulsion may contain additional plasticizers, tackifiers, crosslinkers, multi-valent metal ion salts, defoamers, thickeners, rheology modifiers, pigments, and wetting agents.

Ethylenically unsaturated monomers suitable for use in the process of the present invention, or for preparing the first polymer particles, include monomers such as styrene, butadiene, vinyl toluene, vinyl naphthalene, ethylene, propylene, vinyl acetate, vinyl versatate, vinyl chloride, vinylidene chloride, acrylonitrile, methacrylonitrile, (meth)acrylamide, various $C_1$-$C_{40}$ alkyl esters of (meth)acrylic acid; for example, methyl (meth)acrylate, ethyl (meth)acrylate, n-butyl (meth)acrylate, 2-ethylhexyl (meth)acrylate, cyclohexyl (meth)acrylate, n-octyl (meth)acrylate, n-decyl (meth)acrylate, n-dodecyl (meth)acrylate, tetradecyl (meth)acrylate, lauryl (meth)acrylate, oleyl (meth)acrylate, palmityl (meth)acrylate, and stearyl (meth)acrylate; other (meth)acrylates such as isobornyl (meth)acrylate, benzyl (meth)acrylate, phenyl (meth)acrylate, and 2-bromoethyl (meth)acrylate, alkoxyalkyl (meth)acrylate, such as ethoxyethyl (meth)acrylate, full esters of ethylenically unsaturated di- and tricarboxylic acids and anhydrides, such as ethyl maleate, dimethyl fumarate, and ethyl methyl itaconate. Other suitable monomers are anionic monomers, which includes carboxylic acid containing monomers, such as (meth)acrylic acid, itaconic acid, fumaric acid, and maleic acid; phosphorus acid containing monomers are dihydrogen phosphate monomers, which include 2-phosphoethyl (meth)acrylate, 2-phosphopropyl (meth)acrylate, 3-phosphopropyl (meth)acrylate, and 3-phospho-2-hydroxypropyl (meth)acrylate; sulfur acid containing monomers such as vinyl sulfonic acid and styrene sulphonic acid. Ionic monomers also include salts of the anionic monomers, such as ammonium, sodium, or potassium salts. Still other suitable monomers include multiethylenically unsaturated monomers, which are effective for raising the molecular weight and crosslinking the polymer particles. Examples of multiethylenically unsaturated monomers include allyl (meth)acrylate, tripropylene glycol di(meth)acrylate, diethylene glycol di(meth)acrylate, ethylene glycol di(meth)acrylate, 1,6-hexanediol di(meth)acrylate, 1,3-butylene glycol di(meth) acrylate, polyalkylene glycol di(meth)acrylate, diallyl phthalate, trimethylolpropane tri(meth)acrylate, divinylbenzene, divinyltoluene, trivinylbenzene, and divinyl naphthalene.

The acid monomer content in the present invention ranges from upper limits of 5, 3, and 2.5% by weight to 0.25, 0.5, and 1% by weight. An example of acid monomer is (meth)acrylic acid. In one example, acrylic dispersions containing from 1 to 2.5% of (meth)acrylic acid units and 99.5 to 90%, with particular preference 99 to 97.5%, of n-butyl acrylate or 2-ethylhexyl acrylate units are used and any combination thereof. Another example of acrylic dispersions of the invention are acrylic dispersions containing 80-90% of 2-ethylhexyl acrylate units and from 8 to 20% of n-butyl acrylate units.

The acrylic dispersions may further comprise additional monomer units by means of which, for example, the glass transition temperature and crosslinkability can be controlled. Examples include methyl acrylate, ethyl acrylate, maleic anhydride, acrylamide, glycidyl methacrylate, isopropyl acrylate, n-propyl acrylate, isobutyl acrylate, n-octyl acrylate, and the methacrylates corresponding to these acrylates. The acrylic dispersions normally contain 0-10% of these additional monomer units; wherein either only one additional monomer unit is used, or mixtures thereof are used.

If desired, the dispersion of the present invention may include further additives, such as fillers, for example, or crosslinking agents. However while other dispersions contain small amounts of aziridine compounds, such as ethyleneimine and propyleneimine to act as a crosslinking agents, it has been found that the adhesives of the present invention have good low noise performance without the addition of these toxic materials.

The glass transition temperature obtained depends on the monomers used. The acrylic dispersions used for the adhesives of the invention have glass transition temperatures in the dried state ranging from upper limits of -20, -30 and -40°C to lower limits of -80, -70 and-60°C. All glass transition temperature ranges are inclusive and combinable.

The preferred solids content of the acrylic dispersions range from upper limits of 70, 65, and 62% by weight to lower limits of 56, 58, and 60% by weight. All solids content ranges are inclusive and combinable.

The adhesive tapes of the present invention may be produced by known methods. An overview of customary production methods can be found, for example, in "Coating Equipment", Donatas Satas in Handbook of Pressure Sensitive Adhesive Technology, Second Edition, edited by Donatas Satas, Van Nostrand Reinhold New York, pp. 767-808. Likewise, the known methods of drying and slitting the adhesive tapes can be found in the Handbook of Pressure Sensitive Adhesive Technology, pp. 809-874.

The coating of the films with dispersion adhesives is preferably carried out using wire doctor systems set so as to give the desired application rate. The subsequent drying of the coated film takes place in particular in a drying tunnel operated with hot air. In principle, additional drying by means of infrared lamps is also possible. The preferred weight average particle diameter distributions of the invention allow for increased levels of solids relative to previously "low noise" polymers while maintaining manageable viscosity. This increase in solids level allows for faster drying of the adhesive resulting in reduced energy costs in the tape making process and/ or improved coater productivity.

As far as possible, the rolls of adhesive tape must be wound up with uniform tension and uniform applied pressure. Optimization in winding is dependent on the equipment used and is known to the skilled worker. The conditions during winding should be set so as to provide for sufficiently quiet unwind of the adhesive tape roll.

By means of the present invention, detailed above, it is possible to overcome the known weaknesses of the known adhesive tapes with polyolefin backing and aqueous dispersion. Furthermore, the adhesive tapes of the invention can be printed with commercially customary printing inks, with the substantial advantage over known adhesive tapes with polyolefin backing and acrylic-dispersion-based adhesive that the adhesive tapes of the invention can be printed without addition of surface activation during printing. This significantly simplifies the printing operation.

## EXAMPLES

### Test Method

Rolls of tape are prepared and then aged for 1 week at 50°C. The tapes are removed from the oven and then equilibrated in an environmental room which is set at 23°C and 50% relative humidity. After at least 24 hours equilibration, noise was then measured under these conditions by placing standard commercial sound level meter from Bruel & Kjear (type 2226) 8 cm from the tape as it was being unwound. A tape was considered to be low noise if the decibel level was under 100 decibels at 60 m/min.

### Low Noise Synthesis Examples

Large Unimodal Comparative Examples C1 to C15

678 g of deionized water is charged to a 5 liter glass reactor fitted with stirring and temperature control. A monomer pre-emulsion is formed by mixing monomers listed in Table 1 with 443.7 g deionized water, and 30 g of a 23% aqueous solution of sodium dodecylbenzene sulfonate. The reactor contents are heated to 90°C and 137 g of a 25.4% solids latex having a weight average particle diameter of 100 nm, 10 g ammonium persulfate in 48 g deionized water, and 1 gram sodium carbonate in 31 g deionized water is added to the reactor. The monomer pre-emulsion and a separate feed of 3.7 g ammonium persulfate in 558.4 g deionized water are then added to the reactor over 3 hours while maintaining the reactor contents at 85° C. Upon completion of the addition of the monomer pre-emulsion to the reactor 0.008 g of ferrous sulfate heptahydrate and 0.008 g tetrasodium EDTA in 13 g deionized water is added to the reactor, the reactor contents are gradually cooled, and unpolymerized monomers are reduced by the gradual addition of 4.2 g 70% aqueous t-butyl hydroperoxide in 48 g of deionized water and 2.3 g sodium sulfoxylate formaldehyde in 58 g deionized water. 8.7 g of 28% aqueous ammonia in 13 g of deionized water is then added to raise the pH of the emulsion. The final emulsions have approximately 53% solids and a weight average particle diameter of 400 nm.

Examples 1-15 comprising particles with diameter < 250nm

478 grams of deionized water is charged to a 5 liter glass reactor fitted with stirring and temperature control. A monomer pre-emulsion is formed by mixing monomers listed in Table 1 with 343.7 grams deionized water, and 30 grams of a 23% aqueous solution of sodium dodecylbenzene sulfonate. The reactor contents are heated to 90° C and 61.8 grams of a 25.4 % solids latex having a weight average particle diameter of 100 nm, 10 grams ammonium persulfate in 48 grams deionized water, and 1 gram sodium carbonate in 31 grams deionized water is added to the reactor. The monomer pre-emulsion and a separate feed of 3.7 grams ammonium persulfate in 238.7 grams deionized water are then added to the reactor over 3 hours while maintaining the reactor contents at 85° C. When 45% of the monomer pre-emulsion has been added to the reactor, 80.9 grams of a 27.8 % solids latex having a weight average particle diameter of 80 nm is added to the reactor. Upon completion of the addition of the monomer pre-emulsion to the reactor 0.008 grams of ferrous sulfate heptahydrate and 0.008 grams tetrasodium EDTA in 13 grams deionized water is added to the reactor, the reactor contents are gradually cooled, and unpolymerized monomers are reduced by the gradual addition of 4.2 grams 70% aqueous t-butyl hydroperoxide in 48 grams of deionized water and 2.3 grams sodium sulfoxylate formaldehyde in 58 grams deionized water. 8.7 grams of 28% aqueous ammonia in 13 grams of deionzed water is then added to raise the pH of the emulsion. The final emulsions have approximately 61.8% solids. Approximately 8 to 12% by weight of total polymer in the emulsions is present in particles with a weight average diameter of 110 to 150 nm, the remainder of the polymer being present in particles with a weight average diameter of 450 to 500 nm.

Table 1

| EXAMPLE | MONOMERS |
|---|---|
| C1, 1 | 2202.9 BA / 26.8 AA |
| C2, 2 | 2196.3 BA / 33.4 AA |
| C3, 3 | 1638.8 BA / 557.4 2-EHA/33.4 AA |
| C4, 4 | 1304.4 BA / 891.9 2-EHA/33.4 AA |
| C5, 5 | 1192.9 BA / 891.9 2-EHA / 111.5 MMA / 33.4 AA |
| C6, 6 | 2187.3 BA / 42.4 AA |
| C7, 7 | 2196.3 BA/33.4 MAA |
| C8, 8 | 2189.6 BA/40.1 MAA |
| C9, 9 | 1632.1 BA/557.4 2-EHA/40.1 MAA |
| C10, 10 | 1297.7 BA / 891.9 2-EHA/40.1 MAA |
| C11, 11 | 1186.2 BA / 891.9 2-EHA / 111.5 MMA / 40.1 MAA |
| C12,12 | 2178.4 BA / 51.3 MAA |
| C13, 13 | 2191.8 BA / 15.6 MAA / 22.3 AA |
| C14, 14 | 2196. 3 BA / 22. 3 MAA / 11.1 AA |
| C15, 15 | 2194.0 BA / 29.0 MAA / 6. 7 AA |

Comparative Examples C 1 to C 15 and Examples 1 to 15 are used to make adhesive tape by the following method. Using a pan-fed coater equipped with a wire round rod for coat weight control, Side A of a roll of 30 micron thick bi-axially oriented polypropylene film which has been flame treated on side A to a surface energy of 40 to 42 dynes is coated on side A with emulsion polymer to provide a coat weight of approximately 21 grams / square meter of dry adhesive. The adhesive is dried to approximately 0.25 to 0.5 weight % water, based on the weight of adhesive, and wound onto a roll. The tape is then unwound from the roll, Side B of the film is corona treated to a surface energy of approximately 36 dynes, the tape is slit into 5 cm widths and rewound onto 5 cm wide by 50 Meter long rolls on 7.6 cm diameter cardboard cores.
The 5 cm wide tapes are subjected to noise testing both when freshly made and after 30 days storage at room temperature. On average, tapes made using the Examples 1 to 15 are quieter than the Comparative Examples C 1 to C 15 of the same composition.

## Claims

1.  A low noise adhesive product comprising an adhesive layer formed by the drying of an emulsion polymer on a polyolefin film;
    wherein the emulsion polymer comprises:

    (a) a fine mode comprising 5-95% by weight, based on a total weight of polymer, of first particles having a weight average diameter of less than or equal to 250 nanometers; and
    (b) a large mode comprising at least 5% by weight, based on a total weight of polymer, second particles having a weight average diameter of greater than 250 nanometers; and

further wherein the overall Tg of the emulsion polymer is less than -20° C and the emulsion polymer does not comprise one or more aziridines.

2. The product of claim 1 wherein the weight average diameter of the fine mode is less than or equal to 200 nanometers.

3. The product of claim 1 wherein the emulsion polymer comprises 5-50% by weight, based on a total weight of polymer, of the first particles.

4. The product of claim 1 wherein the emulsion polymer is bimodal.

5. The product of claim 1 wherein the film is biaxially oriented polypropylene.

6. A process of making a low noise adhesive product comprising

   (a) coating a treated surface of a polyolefin film with an emulsion polymer wherein the emulsion polymer comprises:

   (i) a fine mode comprising 5-95% by weight, based on a total weight of polymer, first particles having a weight average diameter of less than or equal to 250 nanometers; and
   (ii) a large mode comprising at least 5% by weight, based on a total weight of polymer, second particles having a weight average diameter of greater than 250 nanometers; and further wherein the overall Tg of the emulsion polymer is less than -20 ° C and the emulsion polymer does not comprise one or more aziridines;

   (b) drying the emulsion polymer on the polyolefin film after coating;
   and
   (c) treating the uncoated side of the polyolefin film.

7. The process of claim 6 wherein the solids content of the emulsion polymer greater than 56 weight percent.

8. The process of claim 6 wherein the weight average diameter of the small mode particles is less than 200 nanometers.

9. The process of claim 6 wherein the emulsion polymer is bimodal.

10. The process of claim 6 wherein the film is biaxially oriented polypropylene.

**European Patent Office**

## EUROPEAN SEARCH REPORT

Application Number

EP 06 29 1789

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/091778 A1 (LEE IVAN [US]) 15 May 2003 (2003-05-15) * the whole document * | 1-10 | INV. C09J7/02 |
| A | EP 1 273 643 A (AIR PRODUCTS POLYMERS L P [US]) 8 January 2003 (2003-01-08) * the whole document * | 1 | |
| A | WO 01/38412 A (AVECIA BV [NL]; OVERBEEK GERARDUS CORNELIS [NL]; PETERS ANTONIUS CAROL) 31 May 2001 (2001-05-31) * the whole document * | 1 | |
| D,A | US 6 706 392 B2 (DAVID WOLFGANG [DE] ET AL DAVID WOLFGANG [DE] ET AL) 16 March 2004 (2004-03-16) * the whole document * | 1 | |

TECHNICAL FIELDS SEARCHED (IPC)

C09J
C08F
C09D

The present search report has been drawn up for all claims

| Place of search | Date of completion of the search | Examiner |
|---|---|---|
| Munich | 27 March 2007 | Knutzen-Mies, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 1789

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2007

| Patent document cited in search report | | Publication date | Patent family member(s) | | Publication date |
|---|---|---|---|---|---|
| US 2003091778 | A1 | 15-05-2003 | NONE | | |
| EP 1273643 | A | 08-01-2003 | CN | 1396229 A | 12-02-2003 |
| | | | KR | 20030008139 A | 24-01-2003 |
| | | | US | 2003143409 A1 | 31-07-2003 |
| | | | US | 2003077443 A1 | 24-04-2003 |
| WO 0138412 | A | 31-05-2001 | AT | 258198 T | 15-02-2004 |
| | | | AU | 1701301 A | 04-06-2001 |
| | | | DE | 60007896 D1 | 26-02-2004 |
| | | | DE | 60007896 T2 | 30-12-2004 |
| | | | EP | 1240223 A1 | 18-09-2002 |
| | | | ES | 2215084 T3 | 01-10-2004 |
| | | | US | 6992121 B1 | 31-01-2006 |
| US 6706392 | B2 | 16-03-2004 | DE | 10203885 A1 | 09-10-2003 |
| | | | EP | 1333078 A2 | 06-08-2003 |
| | | | ES | 2246430 T3 | 16-02-2006 |
| | | | US | 2003143393 A1 | 31-07-2003 |

EPO FORM P0459

For more details about this annex : see Official Journal of the European Patent Office, No. 12/82

## REFERENCES CITED IN THE DESCRIPTION

**Patent documents cited in the description**

- US 6706392 B

**Non-patent literature cited in the description**

- *Bulletin of the American Physical Society,* 1956, vol. 1 (3), 123
- Polymer Handbook. Interscience Publishers
- **A. KRUSE ; G. KRÜGER ; A. BAALMANN ; O.-D. HENNEMANN.** Surface pretreatment of plastics for adhesive bonding. *J. Adhesion Sci. Technol,* 1995, vol. 9 (12), 1611-1621
- **J.M. ASUA.** Miniemulsion Polymerization. *Progress in Polymer Science,* 2002, vol. 27, 1283-1346
- Coating Equipment. Donatas Satas in Handbook of Pressure Sensitive Adhesive Technology. Van Nostrand Reinhold, 767-808
- Handbook of Pressure Sensitive Adhesive Technology. 809-874